# EUROPEAN PATENT SPECIFICATION

(11) **EP 3 910 747 B1**
(45) Date of publication and mention of the grant of the patent: **10.05.2023**
(21) Application number: 21165725.9
(22) Date of filing: 29.03.2021
(51) Int. Cl.: H02J 1/06, H02J 3/00

(54) **HOUSEHOLD APPLIANCE WITH DUAL POWER INPUT**
HAUSHALTSGERÄT MIT DOPPELTER STROMAUFNAHME
APPAREIL DOMESTIQUE À DOUBLE ENTRÉE D'ALIMENTATION

(30) Priority: 13.05.2020 TR 202007489
(43) Date of publication of application: 17.11.2021
(73) Proprietor: Arçelik Anonim Sirketi, 34445 Istanbul (TR)
(72) Inventor: KANAT, Melih Ilkay, 34445 ISTANBUL (TR); ATICI, Kadir Can, 34445 ISTANBUL (TR); POLAT, Akif Hakki, 34445 ISTANBUL (TR)

(56) References cited:
- JP-A- 2016 123 241
- KR-A- 20150 014 134
- US-A- 3 974 660
- US-A1- 2019 089 156

## Description

The present invention relates to a household appliance with dual power input, such as a device that can be operated by DC and/or AC power.

Household appliances provided with dual power input can be powered by different power sources. Depending on working environment conditions and user preferences, these appliances can switch between different power sources, even between different types of power sources, to receive operating power from different DC and/or AC sources. Dual power input devices hence can advantageously be used even when conventional power sources such as AC mains power is not reliable or not available at all.

When the appliance is being disconnected from a first power source, especially when the appliance is already connected to a second power source, unexpected problems with the appliance may occur. For example, electrical voltage generated by a second power source may lead to an abnormal high voltage or current at the input terminal of a first power source, which, in turn, can damage the components the device or threaten safety of the user, for example by causing an electric shock.

In the state of the art, United States Patent application US2008094769A1 discloses a shock-proof electrical output device. The output device monitors the electrical load between the terminals of the outlet and depending on the read load value electrical output is deactivated in order to prevent electric shocks.

Chinese Patent Application CN204425029U discloses a solar energy refrigerator power supply control device. The device comprises a protection circuit which, in response unexpected voltage and current values observed in input or output of the device, causes switching to battery power. US3974660 A discloses the preamble of claim 1.

The aim of the present invention is the realization of a household appliance with dual power input with an enhanced safety. Accordingly, a household appliance conforming to safety standards can be obtained. A related purpose is to enhance reliability and safety of the appliance in a preventive manner. It is aimed, consequently, to prevent potential damage to the device and possible harm to users of the device alike, for example by precluding electric shocks at a power input terminal. Another purpose of the present invention is providing a household appliance with dual power input where the safety can be improved in a simple manner, by employing a protective circuit which is easy and cost-effective to implement.

Household appliance with dual power input realized in order to attain the aim of the present invention, explicated in Claim 1 and the respective claims thereof, comprises a first power input terminal for connecting to a first power source; a second power input terminal for connecting to a second power source, wherein the second power input terminal comprises two endpoints each in electrical connection with a respective electric line, the electric lines being also comprised in the household appliance; and a power supply circuit for receiving power from the first power input terminal and/or, via said electric lines, from the second power input terminal and for distributing power to operate the household appliance.

The household appliance further comprises a protection circuit comprising a first switch and a second switch, both switches being configured to be operated by power received from the second power source. First and second switches are arranged such that the second power input terminal is electrically connected to the power supply circuit when the second power input terminal is connected to the second power source, and the second power input terminal is electrically disconnected from the power supply circuit when the second power input terminal is not connected to the second power source. In this way, it is ensured that power being supplied to the appliance from the first power source does not generate unexpected current or voltage at the second power input terminal as the appliance is being disconnected from the second power source. Hence electrical faults or accidents such as electrical shocks are conveniently prevented.

The first and the second switch may be any electrically operated switching means. Thus, protective solution of the invention can be realized in an easy and cost-effective manner.

The first and second switches operate in reverse non-conducting (open) / conducting (closed) states. When the first switch is in a conducting state, the second switch is in a non-conducting state, and vice versa.

The first switch is on one of said electric lines, being arranged to be in conducting state when the second power input terminal is connected to the second power source, and to be in non-conducting state when the second power input terminal is not connected to the second power source.

The second switch is connected between said electric lines, being arranged to be in non-conducting state when the second power input terminal is connected to the second power source, and to be in conducting state when the second power input terminal is not connected to the second power source.

The switches are preferably arranged such that one of the switches trigger the other, hence a synchronous reaction to connecting to / disconnecting from the second power source is ensured. At least the triggering switch can be a relay. By way of example, the first switch may be triggered by the second switch as the second switch is triggered and changes position between its open and closed states. The second switch may be a two-contact relay comprising a first contact for short-circuiting the lines and a second contact for triggering the first switch. In this embodiment, thus, the protection circuit comprises three switching elements in total.

The first power source may be a direct current (DC) power source, and the second power source may be an alternating current (AC) power source. The first power source may comprise a solar panel and/or a battery. The first power source may be, at least partially, comprised in or connected to the household appliance.

The household appliance may further comprise at least one AC/DC converter to provide DC voltage from the AC voltage generated by the second power source to operate the first switch and/or the second switch.

The household appliance may further comprise a plug for connecting to the second power source. The protection circuit may be disposed in the plug.

The household appliance is preferably a cooling device, for example a solar refrigerator. However, it may be any household appliance with dual power input, such as a device that can operate on AC and/or DC power.

The household appliance realized in order to attain the aim of the present invention is illustrated in the attached figures, where:
Figure 1 is a schematic diagram of a household appliance not covered by the appended claims,
Figure 2 is a schematic diagram of the household appliance according to an embodiment of the invention,
Figure 3 is a schematic circuit diagram of a protection circuit used in the household appliance according to an embodiment of the invention.

The elements illustrated in the figures are numbered as follows:
1. Household appliance
2. First power input terminal
3. Second power input terminal
4. Power supply circuit
5. Protection circuit
6. First switch
7. Second switch
71. First contact
72. Second contact
8. Load
P1. First power source
P2. Second power source

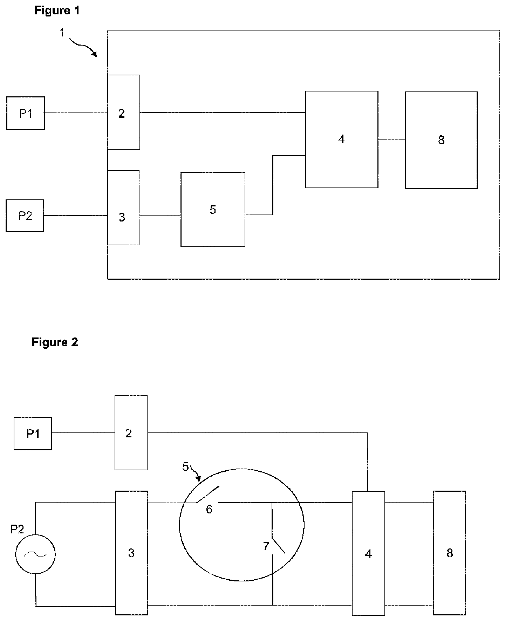

The household appliance (1) comprises a first power input terminal (2) for connecting to a first power source (P1), a second power input terminal (3) for connecting to a second power source (P2), and a power supply circuit (4) for receiving power from the first power input terminal (2) and/or, via electric lines, from the second power input terminal (3) and for distributing power to operate the household appliance (1). Power distributed by the power supply circuit energizes parts and components of the household appliance (1), which as a whole can be regarded as load (8) from an electrical circuit point of view. (Figure 1) Depending on type/design of the household appliance (1) and characteristics of power sources (P1, P2), the power supply circuit (4) and the load (8) may comprise various circuits, components and/or devices. For example, the power supply circuit (4) may comprise a diode bridge and a DC bus. The load (8) on the other hand may comprise appliance parts such as a motor control inverter, an AC motor, a compressor, a lamp and/or a display.

The second power input terminal (3) comprises two endpoints each in electrical connection with an electric line. The end points and electric lines may correspond to positive and negative poles of a power supply cable and wires thereof, respectively.

According to the invention, the household appliance (1) further comprises a protection circuit (5) comprising a first switch (6) and a second switch (7), wherein both switches (6, 7) are operated by power received from the second power source (P2), when the household appliance (1) is connected to the second power source (P2). The switches (6, 7) are therefore triggered when the household appliance (1) is connected to an active second power source (P2). When the household appliance (1) is not connected to the second power source (P2) and/or no power is supplied by the second power source (P2), the switches (6, 7) are deactivated, for example by returning to their 'normal' states. The first and second switches (6, 7) are arranged such that the second power input terminal (3) is electrically connected to the power supply circuit (4) when the second power input terminal (3) is connected to the second power source (P2). When the second power input terminal (3) is not connected to the second power source (P2), however, the second power input terminal (3) is electrically disconnected from the power supply circuit (4).

Switches (6, 7) can be any electrically operated switching means. At least one of the switches (6, 7) is preferably a relay. The switches (6, 7) are preferably triggered by DC power obtained directly or indirectly from the second power source (P2). In embodiments where switching elements other than relays are used, additional driving circuits therefor may be used.

The first switch (6) is on one of said electric lines to which an endpoint of the second power input terminal (3) is connected. The first switch (6) is arranged to be in conducting state when the second power input terminal (3) is connected to the second power source (P2), and to be in non-conducting state when the second power input terminal (3) is not connected to the second power source (P2). The first switch (6), when in conducting state, that is, closed, allows transmitting power from the second power input terminal (3) to the power supply circuit (4); and, when in non-conducting state, that is, open, breaks the electrical connection between the second power input terminal (3) and the power supply circuit (4).

The second switch (7) is connected between said electric lines, as illustrated in Figure 2. The second switch (7) is arranged to be in non-conducting state when the second power input terminal (3) is connected to and powered by the second power source (P2), and to be in conducting state when the second power input terminal (3) is not connected to and/or not powered by the second power source (P2). In this configuration, the second switch (7), when in conducting state, that is closed, creates a short-circuit between the electric lines; and, when in non-conducting state, that is, open, prevents electrical current flowing therebetween.

Referring to Figure 2, therefore, when the second power input terminal (3) is connected to and powered by the second power source (P2), the protection circuit (5) is inactive, allowing the power supply circuit (4) and hence load (8) of the household appliance (1) to be powered by the second power source (P2). When the second power input terminal (3) is not connected to and/or not powered by the second power source (P2), however, the protection circuit (5) is active in that the second power input terminal (3) is electrically disconnected from the power supply circuit (4) and hence from first power source (P1).

In case of an electrical fault at the power supply circuit (4), for example, any hazardous voltage that may have otherwise generated between endpoints of the second power input terminal (3) is prevented by short-circuiting the electric lines connected thereto by means of the second switch (7). In this way, even when a user is in touch with the endpoints of the second input power terminal (3), such as open tips of a plug, no electric shock occurs.

According to at least one embodiment, the first switch (6) and the second switch (7) are arranged such that the first switch (6) is triggered by the second switch (7) as the second switch (7) changes position between open (non-conducting) and closed (conducting) states. When triggered by the household appliance (1) connecting to the second power source (P2), for example, the second switch (7) which may be a normally closed relay, is opened and causes the first switch (6) to be closed. When the household appliance (1) is disconnected from the second power source (2), the second switch (7) then changes back to closed state and causes the first switch (6) to open again. For this purpose, the first switch (6) may be normally open relay.

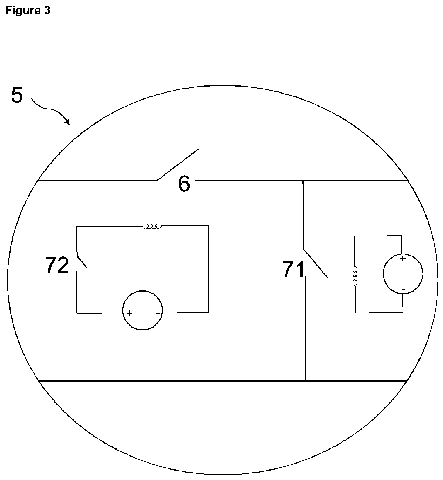

In order to ensure synchronous triggering of switches (6, 7) upon the household appliance (1) being connected to or disconnected from the second power source (P2), the second switch may be a two-contact relay comprising a first contact (71) and a second contact (72). In this embodiment, when the second switch (7) is triggered, the first contact (71) closes for short-circuiting the lines; and the second contact (72) closes for triggering the first switch (6). (Figure 3) According to this embodiment, the protection circuit (5) thus comprises three switching means, namely the first switch (6), the first contact (71) of the second switch (7), and the second contact (72) of the second switch (7).

In a preferred embodiment of the invention, the first power source (P1) is a direct current (DC) power source and the second power source (P2) is an alternating current (AC) power source. The first power source (P1) may comprise a solar panel and/or a battery. The solar panel and/or the battery may be comprised in or externally connected to the household appliance (1). The second power source (P2) can be commercial power. In embodiments where the second power source (P2) is an AC source, the household appliance (1) may further comprise at least one AC/DC converter (not shown) to provide DC voltage to operate the first switch (6) and the second switch (7). Said DC voltage illustrated by DC power sources in Figure 3 can be 12V.

The household appliance (1) may further comprise a plug for connecting the household appliance (1) to the second power source (P2). The protection circuit (5) may be disposed in the plug. Otherwise the protection circuit (5) is preferably disposed between the second power input terminal (3) and power supply circuit (4), for example on an electric board.

The household appliance (1) may be a cooling device, such as a solar refrigerator which can be operated by DC power from a solar panel and/or AC power from the mains. However, the invention is equally applicable to any electric device or appliance provided with dual power input suitable for being energized concurrently by two different power sources.

With the household appliance (1) of the present invention, safety of the household appliance (1) with dual power input is improved, in particular by preventing possible hazards and damages which may be caused at the second power input terminal (3) by a power supplied by a first power source (P1). For example, when a solar refrigerator, connected both to a solar panel and mains power, is disconnected from the mains by unplugging the refrigerator, an unexpectedly high voltage may be generated between metal tips of the plug, which in turn may cause an electric shock. Household appliance (1) of the present invention eliminates such risks by a simple and easy to implement protection circuit (5) comprising two switches (6, 7). Since the protection circuit (5) functions merely in response to connecting to and disconnecting from the second power source (P2), no additional circuits or components for monitoring and detecting abnormalities in voltage or current values are required.

## Claims

1. A household appliance (1) **comprising**: a first power input terminal (2) for connecting to a first power source (P1); a second power input terminal (3) for connecting to a second power source (P2), wherein the second power input terminal (3) comprises two endpoints each in electrical connection with a respective electrical line, the electric lines being comprised in the household appliance;
a power supply circuit (4) for receiving power from the first power input terminal (2) and/or, via said electric lines, from the second power input terminal (3) and for distributing power to operate the household appliance (1); a protection circuit (5) comprising a first switch (6) and a second switch (7), both switches (6, 7) being configured to be operated by power received from the second power source (2); wherein said first and second switches (6, 7) are arranged such that the second power input terminal (3) is electrically connected to the power supply circuit (4) when the second power input terminal (3) is connected to the second power source (P2) and the second power input terminal (3) is electrically disconnected from the power supply circuit (4) when the second power input terminal (3) is not connected to the second power source (P2), **characterized in that** the first switch (6) is on one of said electric lines, the first switch (6) being arranged to be in conducting state when the second power input terminal (3) is connected to the second power source (P2), and to be in non-conducting state when the second power input terminal (3) is not connected to the second power source (P2); and the second switch (7) is connected between said electric lines, the second switch (7) being arranged to be in non-conducting state when the second power input terminal (3) is connected to the second power source (P2), and to be in conducting state when the second power input terminal (3) is not connected to the second power source (P2).

2. The household appliance (1) as in claim 1, wherein the first switch (6) and the second switch (7) are arranged such that the first switch (6) is triggered by the second switch (7) when the second switch (7) changes position between conducting and non-conducting states.

3. The household appliance (1) as in claim 2, wherein the second switch (7) is a two-contact relay comprising a first contact (71) for short-circuiting the lines and a second contact (72) for triggering the first switch (6).

4. The household appliance (1) as in any one of preceding claims, wherein the first power source (P1) is a direct current (DC) power source.

5. The household appliance (1) as in claim 4, wherein the first power source (P1) is a solar panel.

6. The household appliance (1) as in any one of preceding claims, wherein the second power source (P2) is an alternating current (AC) power source.

7. The household appliance (1) as in claim 6, wherein the household appliance (1) further comprises at least one AC/DC converter to provide DC voltage from the AC voltage generated by the second power source (P2) to operate the first switch (6) and the second switch (7).

8. The household appliance (1) as in any one of preceding claims, wherein the household appliance (1) further comprises a plug for connecting to the second power source (P2).

9. The household appliance (1) as in claim 8, wherein the protection circuit (5) is disposed in the plug.

10. The household appliance (1) as in any one of preceding claims, wherein the household appliance (1) is a cooling device.

11. The household appliance (1) as in claim 10, wherein the household appliance (1) is a solar refrigerator.

## Patentansprüche

1. Ein Haushaltsgerät (1) **umfasst:** einen ersten Stromeingangsanschluss (2) zum Verbinden mit einer ersten Stromquelle (P1); einen zweiten Stromeingangsanschluss (3) zum Verbinden mit einer zweiten Stromquelle (P2), wobei der zweite Stromeingangsanschluss (3) zwei Endpunkte umfasst, die jeweils in elektrischer Verbindung mit einer jeweiligen elektrischen Leitung stehen, wobei die elektrischen Leitungen in dem Haushaltsgerät enthalten sind, eine Energieversorgungsschaltung (4) zum Empfangen von Energie von dem ersten Energieeingangsanschluss (2) und/oder, über die elektrischen Leitungen, von dem zweiten Energieeingangsanschluss (3) und zum Verteilen von Energie, um das Haushaltsgerät (1) zu betreiben; eine Schutzschaltung (5), die einen ersten Schalter (6) und einen zweiten Schalter (7) umfasst, wobei beide Schalter (6, 7) so konfiguriert sind, dass sie durch Strom betrieben werden, der von der zweiten Stromquelle (2) empfangen wird; wobei der erste und der zweite Schalter (6, 7) so angeordnet sind, dass der zweite Leistungseingangsanschluss (3) elektrisch mit der Leistungsversorgungsschaltung (4) verbunden ist, wenn der zweite Leistungseingangsanschluss (3) mit der zweiten Leistungsquelle verbunden ist (P2) und der zweite Leistungseingangsanschluss (3) elektrisch von der Leistungsversorgungsschaltung (4) getrennt ist, wenn der zweite Leistungseingangsanschluss (3) nicht mit der zweiten Leistungsquelle (P2) verbunden ist, **gekennzeichnet ist es dadurch,** dass der erste Schalter (6) an einer der elektrischen Leitungen liegt, wobei der erste Schalter (6) so angeordnet ist, dass er in einem leitenden Zustand ist, wenn der zweite Stromeingangsanschluss (3) mit der zweiten Stromquelle (P2) verbunden ist. und in einem nichtleitenden Zustand zu sein, wenn der zweite Stromeingangsanschluss (3) nicht mit der zweiten Stromquelle (P2) verbunden ist; und der zweite Schalter (7) zwischen die elektrischen Leitungen geschaltet ist, wobei der zweite Schalter (7) so angeordnet ist, dass er in einem nicht leitenden Zustand ist, wenn der zweite Stromeingangsanschluss (3) mit der zweiten Stromquelle (P2) verbunden ist, und im leitenden Zustand zu sein, wenn der zweite Stromeingangsanschluss (3) nicht mit der zweiten Stromquelle (P2) verbunden ist.

2. Ein Haushaltsgerät (1), wie in Anspruch 1 aufgeführt, wobei der erste Schalter (6) und der zweite Schalter (7) so angeordnet sind, dass der erste Schalter (6) durch den zweiten Schalter (7) ausgelöst wird, wenn der zweite Schalter (7) seine Position zwischen leitenden und nichtleitenden Zuständen ändert.

3. Ein Haushaltsgerät (1), wie in Anspruch 2 aufgeführt, wobei der der zweite Schalter (7) ein Zweikontakt-Relais mit einem ersten Kontakt (71) zum Kurzschließen der Leitungen und einem zweiten Kontakt (72) zum Auslösen des ersten Schalters (6) ist.

4. Ein Haushaltsgerät (1), wie in einem der vorherigen Ansprüchen aufgeführt, wobei die erste Energiequelle (P1) eine Gleichstrom(DC)-Energiequelle ist.

5. Ein Haushaltsgerät (1), wie in Anspruch 4 aufgeführt, wobei die erste Stromquelle (P1) ein Solarpanel ist.

6. Ein Haushaltsgerät (1), wie in einem der vorherigen Ansprüchen aufgeführt, wobei die zweite Energiequelle (P2) eine Wechselstrom(AC)-Energiequelle ist.

7. Ein Haushaltsgerät (1), wie in Anspruch 6 aufgeführt, wobei das Haushaltsgerät (1) mindestens einen AC/DC-Wandler zum Bereitstellen von Gleichspannung aus der von der zweiten Stromquelle (P2) erzeugten Wechselspannung zum Betreiben des ersten Schalters (6) und des zweiten Schalters (7) umfasst.

8. Ein Haushaltsgerät (1), wie in einem der vorherigen Ansprüchen aufgeführt, wobei das Haushaltsgerät (1) ferner einen Stecker zum Verbinden mit der zweiten Stromquelle (P2) umfasst.

9. Ein Haushaltsgerät (1), wie in Anspruch 8 aufgeführt, wobei die Schutzschaltung (5) im Stecker angeordnet ist.

10. Ein Haushaltsgerät (1), wie in einem der vorherigen Ansprüchen aufgeführt, wobei das Haushaltsgerät (1) ein Kühlgerät ist.

11. Ein Haushaltsgerät (1), wie in Anspruch 10 aufgeführt, wobei das Haushaltsgerät (1) ein Solarkühlschrank ist.

## Revendications

1. Un appareil ménager (1) **comprenant:** une première borne d'entrée d'alimentation (2) pour se connecter à une première source d'alimentation (P1) ;une seconde borne d'entrée d'alimentation (3) pour se connecter à une seconde source d'alimentation (P2), dans lequel la seconde borne d'entrée d'alimentation (3) comprend deux points d'extrémité, chacun en connexion électrique avec une ligne électrique respective, les lignes électriques étant comprises dans l'appareil ménager ;un circuit d'alimentation (4) destiné à recevoir de l'énergie de la première borne d'entrée d'énergie (2) et/ou, par l'intermédiaire desdites lignes électriques, de la deuxième borne d'entrée d'énergie (3) et à distribuer de l'énergie pour faire fonctionner l'appareil ménager (1) ; un circuit de protection (5) comprenant un premier commutateur (6) et un deuxième commutateur (7), les deux commutateurs (6, 7) étant configurés pour être actionnés par l'énergie reçue de la deuxième source d'énergie (2) dans lequel lesdits premier et second commutateurs (6, 7) sont agencés de telle sorte que la seconde borne d'entrée d'alimentation (3) est électriquement connectée au circuit d'alimentation (4) lorsque la seconde borne d'entrée d'alimentation (3) est connectée à la seconde source d'alimentation (P2) et la seconde borne d'entrée d'alimentation (3) est électriquement déconnectée du circuit d'alimentation (4) lorsque la seconde borne d'entrée d'alimentation (3) n'est pas connectée à la seconde source d'alimentation (P2), **caractérisé en ce que** le premier commutateur (6) est sur l'une desdites lignes électriques, le premier commutateur (6) étant agencé pour être dans un état conducteur lorsque la seconde borne d'entrée d'alimentation (3) est connectée à la seconde source d'alimentation (P2), et pour être dans un état non conducteur lorsque la seconde borne d'entrée d'alimentation (3) n'est pas connectée à la seconde source d'alimentation (P2) ; et le second commutateur (7) est connecté entre lesdites lignes électriques, le second commutateur (7) étant agencé pour être dans un état non conducteur lorsque la seconde borne d'entrée d'alimentation (3) est connectée à la seconde source d'alimentation (P2), et pour être dans un état conducteur lorsque la seconde borne d'entrée d'alimentation (3) n'est pas connectée à la seconde source d'alimentation (P2).

2. L'appareil ménager (1) selon la déclaration 1, dans lequel le premier commutateur (6) et le second commutateur (7) sont disposés de telle sorte que le premier commutateur (6) est déclenché par le second commutateur (7) lorsque le second commutateur (7) change de position entre les états conducteur et non conducteur.

3. L'appareil ménager (1) selon la déclaration 2, dans lequel le deuxième interrupteur (7) est un relais à deux contacts comprenant un premier contact (71) pour court-circuiter les lignes et un deuxième contact (72) pour déclencher le premier interrupteur (6).

4. L'appareil ménager (1) comme dans l'une quelconque des déclarations précédentes, dans lequel la première source d'alimentation (P1) est une source d'alimentation en courant continu (DC).

5. L'appareil ménager (1) selon la déclaration 4, dans lequel la première source d'énergie (P1) est un panneau solaire.

6. L'appareil ménager (1) comme dans l'une quelconque des déclarations précédentes, dans lequel la deuxième source d'alimentation (P2) est une source d'alimentation en courant alternatif (CA).

7. L'appareil ménager (1) selon la déclaration 6, dans lequel l'appareil ménager (1) comprend en outre au moins un convertisseur CA/CC pour fournir une tension CC à partir de la tension CA générée par la seconde source d'alimentation (P2) pour faire fonctionner le premier commutateur (6) et le second commutateur (7).

8. L'appareil ménager (1) comme dans l'une quelconque des déclarations précédentes, dans lequel l'appareil ménager (1) comprend en outre une fiche pour la connexion à la deuxième source d'alimentation (P2).

9. L'appareil ménager (1) selon la déclaration 8, dans lequel le circuit de protection (5) est disposé dans la fiche.

10. L'appareil ménager (1) comme dans l'une quelconque des déclarations précédentes, dans lequel l'appareil ménager (1) est un dispositif de refroidissement.

11. L'appareil ménager (1) selon la déclaration 10, dans lequel l'appareil ménager (1) est un réfrigérateur solaire.
